# FASCICULE DE BREVET EUROPEEN

(11) **EP 4 515 090 B1**
(45) Date de publication et mention de la délivrance du brevet: **18.03.2026**
(21) Numéro de dépôt: 23720909.3
(22) Date de dépôt: 25.04.2023
(51) Int. Cl.: F02C 3/22, F02C 7/16, F02C 7/224

(54) **SYSTEME DE CONTROLE DE LA TEMPERATURE D'UN FLUIDE CALOPORTEUR DANS UNE BOUCLE DE CIRCULATION, PROCEDE DE CONTROLE DE LA TEMPERATURE**
SYSTEM ZUR STEUERUNG DER TEMPERATUR EINER WÄRMEÜBERTRAGUNGSFLÜSSIGKEIT IN EINEM KREISLAUF UND TEMPERATURSTEUERUNGSVERFAHREN
SYSTEM FOR CONTROLLING THE TEMPERATURE OF A HEAT TRANSFER FLUID IN A CIRCULATION LOOP, AND TEMPERATURE CONTROL METHOD

(30) Priorité: 26.04.2022 FR 2203889
(43) Date de publication de la demande: 05.03.2025
(73) Titulaire: SAFRAN, 75015 Paris (FR)
(72) Inventeur: MAALOUF, Samer, 77550 MOISSY-CRAMAYEL (FR); CAHUZAC, Adrien, 77550 MOISSY-CRAMAYEL (FR); PARMENTIER, Nicolas, Claude, 77550 MOISSY-CRAMAYEL (FR)
(74) Mandataire: Argyma
(86) Numéro de dépôt international: PCT/EP2023/060710
(87) Numéro de publication internationale: WO 2023/208872

(56) Documents cités:
- WO-A1-02/16743
- FR-A1- 2 914 365
- FR-A1- 3 110 938

## Description

### DOMAINE TECHNIQUE

La présente invention concerne le domaine des aéronefs comportant un fluide stocké dans un réservoir cryogénique, par exemple du carburant alimentant une turbomachine.

Il est connu de stocker un fluide, par exemple du carburant comme de l'hydrogène, sous forme liquide pour limiter l'encombrement et la masse des réservoirs de l'aéronef. A titre d'exemple, le carburant est stocké à une température de l'ordre de - 253 à -251°C (20 à 22 Kelvins) dans un réservoir cryogénique de l'aéronef.

Dans cet exemple, afin de pouvoir être injecté dans la chambre de combustion d'une turbomachine, le carburant doit être conditionné, c'est-à-dire pressurisé et chauffé, afin de permettre une combustion optimale. Un conditionnement est par exemple nécessaire pour réduire le risque de givrage/solidification de la vapeur d'eau contenue dans l'air qui circule dans la turbomachine, en particulier, au niveau des injecteurs de carburant de la turbomachine.

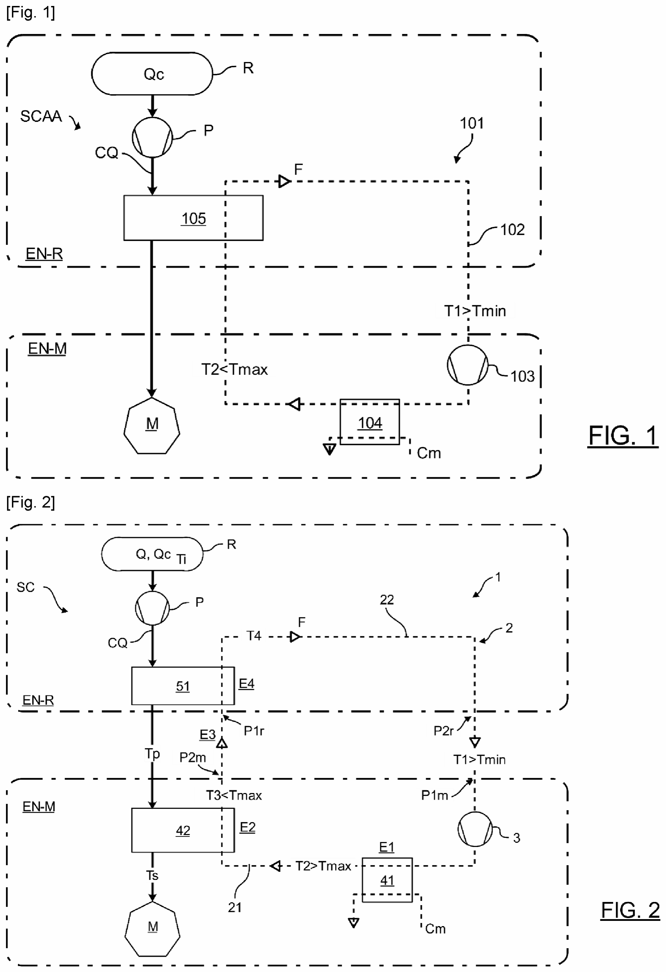

En référence à la figure 1, il est représenté un système de conditionnement SCAA comprenant un circuit de carburant CQ relié en entrée à un réservoir cryogénique R et en sortie à la chambre de combustion d'une turbomachine M. Le système de conditionnement SCAA comprend une pompe mécanique P pour entrainer un flux de carburant Qc d'amont en aval dans le circuit de carburant CQ. De manière connue, l'aéronef comprend une enceinte moteur EN-M (par exemple une nacelle) et une enceinte réservoir EN-R, distincte et distante de l'enceinte moteur EN-M. Le réservoir cryogénique R est monté dans l'enceinte réservoir EN-R et la turbomachine M est montée dans l'enceinte moteur EN-M.

Le système de conditionnement SCAA comprend également un système de contrôle de la température 101 d'un fluide caloporteur F qui apporte des calories au flux de carburant Qc afin de le réchauffer pour qu'il puisse être injecté dans la turbomachine M avec une température et une pression optimales.

Dans l'art antérieur, on connait par exemple de la demande de brevet FR2005628A1, un système de contrôle de la température 101, également représenté sur la figure 1, qui comprend une boucle de circulation 102 du fluide caloporteur F et une pompe mécanique 103 de recirculation pour entrainer le fluide caloporteur F en mouvement dans la boucle de circulation 102. Dans le système de contrôle 101 décrit dans le document FR2005628A1, le fluide caloporteur F extrait les calories de sources chaudes Cm disponibles à bord de l'aéronef (par exemple la chaleur issue de l'huile de lubrification de la turbomachine M, les calories en sortie de turbine, chaleur de la tuyère), via un échangeur de chaleur moteur 104 monté sur la boucle de circulation 102 dans l'enceinte monteur EN-M. Le système de contrôle 101 de la température comprend également un échangeur de chaleur réservoir 105 pour réchauffer le flux de carburant Qc du système de conditionnement SCAA à partir des calories transférées par le fluide caloporteur F.

En pratique, les sources chaudes Cm présentes dans l'enceinte moteur EN-M permettent de réchauffer le fluide caloporteur F via l'échangeur moteur 104 depuis une première température T1 jusqu'à une deuxième température T2. Le fluide caloporteur F circule ensuite à la température T2 dans la boucle de circulation 102 jusqu'à l'échangeur réservoir 105 pour réchauffer le flux de carburant Qc en sortie de la pompe mécanique P, donc dans l'enceinte réservoir EN-R. Dans une forme de réalisation non représentée, l'architecture décrite dans le brevet FR2005628A1 comprend également un échangeur de chaleur monté dans l'enceinte réservoir EN-R pour réchauffer une nouvelle fois le fluide caloporteur F au moyen des sources chaudes présentes dans l'enceinte réservoir EN-R, telles que l'air en sortie cabine ou les rejets thermiques issus des composants électriques/électroniques à bord par exemple.

Cependant, de manière connue, dans un tel système de contrôle 101, la température du fluide caloporteur F ne doit pas dépasser une plage de températures prédéterminée. En pratique, la température T2 du fluide caloporteur F en sortie de l'enceinte moteur EN-M doit être inférieure à une température maximale de fonctionnement Tmax, afin de pouvoir acheminer le fluide caloporteur F au plus près du réservoir R sans risquer d'endommager la structure de l'aéronef que traverse la boucle de circulation 102, comme les ailes de l'aéronef par exemple. D'autre part, la température T1 du fluide caloporteur F en entrée de l'enceinte moteur EN-M doit être supérieure à une température minimale de fonctionnement Tmin, afin d'éviter tout risque de givrage des sources chaudes Cm dans l'échangeur moteur 104. Autrement dit, le contrôle de la température dans la boucle de circulation 102 est fortement contraint.

Pour limiter la température maximale du fluide caloporteur F en sortie de l'échangeur moteur 104, il est connu d'augmenter le débit de circulation du fluide caloporteur F dans la boucle de circulation 102, ce qui présente de nombreux inconvénients. En effet, la masse et l'encombrement de la tuyauterie de la boucle de circulation 102 sont très importants, ce qui n'est pas souhaitable dans un aéronef. De plus, les performances aérothermiques des échangeurs de chaleur sont limitées ce qui augmente les défauts de distribution dans les échangeurs de chaleur. La pompe mécanique est également contrainte de fonctionner à un débit plus important, ce qui augmente sa consommation électrique.

L'invention vise ainsi à éliminer au moins certains de ces inconvénients en proposant un nouveau système de contrôle de la température du fluide caloporteur dans la boucle de circulation permettant un chauffage qui soit efficace et fiable, sans limiter la plage de températures du fluide caloporteur. On connait du document FR3110938A1 une architecture dans laquelle un flux de carburant est chauffé dans un échangeur de chaleur à partir de calories transférées par un fluide caloporteur. Le fluide caloporteur circule dans une boucle de circulation et traverse plusieurs échangeurs de chaleur dans lesquels il est réchauffé à partir de calories transférées par diverses sources chaudes issues d'un environnement aéronef ou d'un environnement moteur.

### PRESENTATION DE L'INVENTION

L'invention concerne un système de conditionnement de carburant configuré pour alimenter une turbomachine d'aéronef selon la revendication 1. Le système de conditionnement comprend un système de contrôle de la température d'un fluide caloporteur configuré pour transférer des calories à un fluide à réchauffer, le fluide à réchauffer étant issu d'un réservoir cryogénique dans lequel il est stocké à une température initiale et configuré pour être acheminé vers un moteur via un circuit de fluide, le réservoir cryogénique étant monté dans une enceinte réservoir, le moteur étant monté dans une enceinte moteur distincte de l'enceinte réservoir, l'enceinte réservoir étant configurée pour fonctionner à une température inférieure à une température maximale de fonctionnement, l'enceinte moteur étant configurée pour fonctionner à une température supérieure à une température minimale de fonctionnement, le système de contrôle comprenant :
- une boucle de circulation du fluide caloporteur s'étendant à la fois dans l'enceinte réservoir et dans l'enceinte moteur, la boucle de circulation comprenant :
   - une branche moteur s'étendant dans l'enceinte moteur entre un point d'entrée moteur et un point de sortie moteur, le fluide caloporteur circulant d'amont en aval entre le point d'entrée moteur et le point de sortie moteur, le fluide caloporteur ayant une première température au point d'entrée moteur, la première température étant supérieure à la température minimale de fonctionnement de l'enceinte moteur,
   - une branche réservoir s'étendant dans l'enceinte réservoir entre un point d'entrée réservoir et un point de sortie réservoir, le fluide caloporteur circulant d'amont en aval entre le point d'entrée réservoir et le point de sortie réservoir, le point de sortie moteur étant relié fluidiquement au point d'entrée réservoir, le point de sortie réservoir étant relié fluidiquement au point d'entrée moteur,
- au moins un premier échangeur moteur, monté sur la branche moteur, configuré pour réchauffer le fluide caloporteur jusqu'à une deuxième température supérieure à la première température, à partir de calories transférées par au moins un fluide chaud disponible dans l'enceinte moteur, la deuxième température étant supérieure à la température maximale de fonctionnement de l'enceinte réservoir,
- au moins un premier échangeur réservoir, monté sur la branche réservoir, configuré pour réchauffer le fluide à réchauffer à partir du fluide caloporteur jusqu'à une température primaire,
- au moins un deuxième échangeur moteur, monté sur la branche moteur, configuré pour réchauffer le fluide à réchauffer à partir du fluide caloporteur jusqu'à une température secondaire, supérieure à la température primaire,
- au moins une pompe mécanique configurée pour faire circuler le fluide caloporteur dans la boucle de circulation, de manière à :
   - dans le deuxième échangeur moteur, transférer une première partie de calories du fluide caloporteur au fluide à réchauffer et refroidir le fluide caloporteur jusqu'à une troisième température inférieure à la deuxième température, la troisième température étant inférieure à la température maximale de fonctionnement, de manière à chauffer le fluide caloporteur dans le premier échangeur moteur à une température supérieure à la température maximale de fonctionnement et à abaisser cette température dans le deuxième échangeur moteur en dessous de la température maximale de fonctionnement, avant sa sortie de l'enceinte moteur et son entrée dans l'enceinte réservoir,
   - dans le premier échangeur réservoir, transférer une deuxième partie de calories du fluide caloporteur au fluide à réchauffer et refroidir le fluide caloporteur jusqu'à une quatrième température, inférieure à la troisième température, de manière à chauffer le fluide à réchauffer jusqu'à la température secondaire, de manière à préchauffer le fluide à réchauffer avant sa sortie de l'enceinte réservoir.

Le système de contrôle selon l'invention permet au fluide caloporteur d'être chauffé par le premier échangeur moteur jusqu'à une température supérieure à la température maximale de fonctionnement, ce qui permet de ne pas augmenter le débit de circulation du fluide caloporteur dans la boucle de circulation. Un débit limité permet avantageusement de limiter la masse et l'encombrement de la tuyauterie dans la boucle de circulation, puisque celle-ci n'a pas besoin d'être renforcée pour résister à des débits particulièrement importants. Un débit limité permet également d'optimiser les performances aérothermiques des échangeurs de chaleur montés sur la boucle de circulation, ce qui permet de limiter les risques de défaut de distribution des fluides dans les échangeurs de chaleur. De plus, la pompe mécanique n'est pas contrainte de fonctionner à un débit particulièrement élevé, ce qui permet de limiter son usure et sa consommation électrique.

Le système de contrôle selon l'invention permet également un chauffage du fluide à réchauffer en deux temps. Dans un premier temps, le fluide à réchauffer est chauffé dans le premier échangeur réservoir jusqu'à la température primaire permettant d'assurer le meilleur compromis entre la simplicité et la sécurité de mise en œuvre du circuit. Dans un deuxième temps, le fluide à réchauffer est chauffé dans le deuxième échangeur moteur jusqu'à la température secondaire suffisamment importante pour permettre par exemple l'injection de carburant dans la turbomachine pour l'alimenter.

Dans une forme de réalisation, le système de contrôle comprend au moins un deuxième échangeur réservoir, monté sur la branche réservoir, le deuxième échangeur réservoir étant configuré pour réchauffer le fluide caloporteur à partir de calories transférées par au moins un fluide chaud disponible dans l'enceinte réservoir. Dans une première forme de réalisation, le deuxième échangeur réservoir est configuré pour être monté en aval du premier échangeur réservoir, le deuxième échangeur réservoir étant alors configuré pour réchauffer le fluide caloporteur depuis la quatrième température jusqu'à la première température. Le fluide caloporteur peut ainsi être refroidi de manière plus importante dans le premier échangeur réservoir en transférant plus de calories au flux de carburant. Cela permet d'abaisser encore le débit de fluide caloporteur. Dans une deuxième forme de réalisation, le deuxième échangeur réservoir est configuré pour être monté en amont du premier échangeur réservoir. Un tel deuxième échangeur réservoir permet d'utiliser la chaleur disponible à bord de l'aéronef et ainsi de limiter par exemple la taille et l'encombrement d'un échangeur dans une turbomachine.

Dans cette forme de réalisation, la quatrième température du fluide caloporteur en sortie du premier échangeur réservoir est comprise entre -123°C (150K) et 2°C (275K), permettant d'abaisser la température du fluide caloporteur dans le premier échangeur réservoir localement plus bas que la température minimale de fonctionnement pour le réchauffer ensuite. Cela permet d'abaisser encore le débit de fluide caloporteur.

Dans une deuxième forme de réalisation, la quatrième température du fluide caloporteur en sortie du premier échangeur réservoir est comprise entre 2°C (275K) et 77°C (350K). La température du fluide caloporteur est ainsi supérieure à 2°C (275K) en entrant dans l'échangeur de chaleur à source de chaleur, permettant de limiter tout risque de givrage des sources chaudes dans l'échangeur de chaleur.

De préférence, la deuxième température du fluide caloporteur en sortie du premier échangeur moteur est comprise entre 227°C (500K) et 377°C (650K), ce qui permet de réduire le débit de circulation du fluide caloporteur, permettant ainsi l'utilisation d'une tuyauterie moins lourde et moins encombrante. Le fluide caloporteur peut ainsi être chauffé à une température supérieure à la température maximale de fonctionnement, c'est-à-dire 227°C (500K), puisqu'il va commencer par transférer des calories au flux de carburant dans l'enceinte moteur.

Dans une forme de réalisation préférée, la troisième température du fluide caloporteur en sortie du deuxième échangeur moteur est comprise entre 77°C (350K) et 227°C (500K). La température du fluide caloporteur est ainsi inférieure à la température maximale de fonctionnement en sortant de l'enceinte moteur. Cela permet au fluide caloporteur de circuler entre l'enceinte moteur et l'enceinte réservoir, par exemple dans la structure d'un aéronef (par exemple dans les ailes) sans que cela ne présente un quelconque risque d'endommagement. De plus, le transport du fluide n'a pas besoin d'être réalisé dans des tuyauteries particulières pour résister à des températures élevées, tuyauteries qui présenteraient une masse, un encombrement et/ou un coût importants.

Dans une forme de réalisation, la troisième température du fluide caloporteur en sortie du deuxième échangeur moteur est inférieure à 202°C (475K), de préférence inférieure à 177°C (450K). Une telle température permet l'utilisation de tuyauteries en aluminium, au lieu de tuyauteries en inox comme cela est le cas dans l'art antérieur, permettant un gain de masse important.

Dans une forme de réalisation, le système de contrôle comprend une vanne commandable montée sur la boucle de circulation entre le deuxième échangeur moteur et le premier échangeur réservoir, de manière à diriger une première partie du fluide caloporteur vers le premier échangeur réservoir et vers l'enceinte moteur et une deuxième partie du fluide caloporteur vers le premier échangeur moteur, de manière à permettre un débit moins important du fluide caloporteur vers l'enceinte moteur. Une telle vanne commandable permet de réguler le circuit tout en maintenant une extraction optimale des calories dans les sources moteurs.

Dans une forme de réalisation, le système de contrôle comprend un échangeur de chaleur régénérateur, monté sur la branche moteur, l'échangeur de chaleur régénérateur étant configuré pour réchauffer le fluide caloporteur en amont du premier échangeur moteur par le fluide caloporteur en aval du premier échangeur moteur. Grâce à un tel échangeur de chaleur régénérateur, le fluide caloporteur peut être refroidi en sortie du premier échangeur réservoir à une température inférieure à la température minimale de fonctionnement sans que cela ne présente un risque de givrer les sources chaudes dans le premier échangeur moteur. Un refroidissement plus important dans le premier échangeur réservoir permet au fluide caloporteur de transférer plus de calories au fluide à réchauffer (à iso débit de fluide caloporteur), permettant de réchauffer ce dernier de manière plus importante tout en limitant la consommation électrique du système.

Dans une forme de réalisation préférée, la température primaire du flux de carburant en sortie du premier échangeur réservoir est comprise entre -173°C (100K) et -73°C (200K), ce qui permet de s'assurer que le carburant est dans un état gazeux en sortie du premier échangeur réservoir, permettant de limiter l'utilisation de tuyauteries spécifiques qui présenteraient une isolation thermique particulière et seraient donc plus lourdes et plus encombrantes.

De préférence, la température secondaire du flux de carburant en sortie du deuxième échangeur moteur est comprise entre -73°C (200K) et 27°C (300K), correspondant à la température d'injection du carburant dans la chambre de combustion de la turbomachine, ce qui permet de limiter le risque de givrage des injecteurs montés dans la chambre de combustion.

L'invention porte également sur un aéronef comprenant un réservoir cryogénique, une turbomachine et un système de conditionnement tel que décrit précédemment.

Enfin, selon la revendication 13, l'invention concerne un procédé de contrôle de la température du fluide caloporteur au moyen du système de conditionnement tel que décrit précédemment, le procédé comprenant les étapes consistant à :
- chauffer le fluide caloporteur dans l'enceinte moteur dans le premier échangeur moteur, jusqu'à une deuxième température supérieure à la température maximale de fonctionnement de l'enceinte réservoir,
- refroidir le fluide caloporteur dans l'enceinte moteur dans le deuxième échangeur moteur, jusqu'à une troisième température inférieure à la température maximale de fonctionnement,
- acheminer le fluide caloporteur vers l'enceinte réservoir.

Selon un aspect, dans une forme de réalisation non couverte par les revendications, il est également présenté un système de contrôle de la température d'un fluide caloporteur configuré pour transférer des calories à un fluide à réchauffer, le fluide à réchauffer étant issu d'un réservoir cryogénique dans lequel il est stocké à une température initiale et configuré pour être acheminé vers un moteur via un circuit de fluide, le réservoir cryogénique étant monté dans une enceinte réservoir, le moteur étant monté dans une enceinte moteur distincte de l'enceinte réservoir, le système de contrôle comprenant :
- une boucle de circulation du fluide caloporteur s'étendant à la fois dans l'enceinte réservoir et dans l'enceinte moteur, la boucle de circulation comprenant :
   - une branche moteur s'étendant dans l'enceinte moteur entre un point d'entrée moteur et un point de sortie moteur, le fluide caloporteur circulant d'amont en aval entre le point d'entrée moteur et le point de sortie moteur, le fluide caloporteur ayant une première température au point d'entrée moteur,
   - une branche réservoir s'étendant dans l'enceinte réservoir entre un point d'entrée réservoir et un point de sortie réservoir, le fluide caloporteur circulant d'amont en aval entre le point d'entrée réservoir et le point de sortie réservoir, le point de sortie moteur étant relié fluidiquement au point d'entrée réservoir, le point de sortie réservoir étant relié fluidiquement au point d'entrée moteur,
- au moins une pompe mécanique configurée pour faire circuler le fluide caloporteur dans la boucle de circulation,
- au moins un premier échangeur moteur, monté sur la branche moteur, configuré pour réchauffer le fluide caloporteur jusqu'à une troisième température supérieure à la première température, à partir de calories transférées par au moins un fluide chaud disponible dans l'enceinte moteur, la troisième température étant supérieure à une température maximale de fonctionnement,
- au moins un premier échangeur réservoir, monté sur la branche réservoir, configuré pour réchauffer le fluide à réchauffer à partir de calories transférées par le fluide caloporteur jusqu'à une température primaire,
- au moins un échangeur de chaleur régénérateur, monté sur la branche moteur, l'échangeur de chaleur régénérateur étant configuré pour réchauffer le fluide caloporteur jusqu'à une deuxième température supérieure à la première température et inférieure à la troisième température, la deuxième température étant supérieure à une température minimale de fonctionnement, l'échangeur de chaleur régénérateur étant configuré pour transférer des calories du fluide caloporteur circulant en aval du premier échangeur moteur à la troisième température au fluide caloporteur circulant en amont du premier échangeur moteur à la première température, de manière à permettre au fluide caloporteur d'être réchauffé dans le premier échangeur moteur à une température supérieure à la température maximale de fonctionnement et d'être refroidi avant la sortie de l'enceinte moteur à une température inférieure à la température maximale de fonctionnement.

Le système de contrôle tel que décrit précédemment permet au fluide caloporteur d'entrer dans l'enceinte moteur à une température inférieure à la température minimale de fonctionnement. Un refroidissement plus important permet au fluide caloporteur de transférer plus de calories au fluide à réchauffer dans le premier échangeur réservoir, permettant de réchauffer le fluide à réchauffer de manière plus importante. Le fluide caloporteur étant avantageusement réchauffé par l'échangeur de chaleur régénérateur avant d'entrer dans le premier échangeur moteur, la boucle de circulation ne présente pas de risque de givrer la (les) source(s) chaude(s) dans le premier échangeur moteur.

De manière avantageuse, le fluide caloporteur peut également être chauffé par le premier échangeur moteur jusqu'à une température supérieure à la température maximale de fonctionnement, ce qui permet de ne pas augmenter le débit de circulation du fluide caloporteur dans le premier échangeur moteur. Un débit limité permet avantageusement de limiter la masse et l'encombrement de la tuyauterie dans la boucle de circulation, puisque celle-ci n'a pas besoin d'être renforcée pour résister à des débits particulièrement importants. Un débit limité permet également d'optimiser les performances aérothermiques des échangeurs de chaleur montés sur la boucle de circulation, ce qui permet de limiter les risques de défaut de distribution des fluides dans les échangeurs de chaleur. De plus, la pompe mécanique n'est pas contrainte de fonctionner à un débit particulièrement élevé, ce qui permet de limiter son usure et sa consommation électrique.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un système de conditionnement comprenant un système de contrôle selon l'art antérieur.
La figure 2 est une représentation schématique d'un système de conditionnement comprenant un système de contrôle selon une forme de réalisation de l'invention.
La figure 3 est une représentation schématique d'un système de contrôle selon une deuxième forme de réalisation de l'invention.
La figure 4 est une représentation schématique d'un système de contrôle selon une troisième forme de réalisation de l'invention.
La figure 5 est une représentation schématique d'un système de contrôle selon une troisième forme de réalisation de l'invention.
La figure 6 est une représentation schématique d'un système de contrôle selon un exemple non couvert par les revendications.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 2, il est représenté un système de conditionnement SC d'un fluide à réchauffer Q issu d'un réservoir cryogénique R. Dans cet exemple, le fluide à réchauffer Q est stocké dans le réservoir cryogénique R à une température initiale Ti de l'ordre de - 253°C (20K) à -251°C (22K). A cette température, le fluide à réchauffer Q est liquide.

Dans cet exemple, le fluide à réchauffer Q est du carburant configuré pour alimenter un moteur, en particulier dans cet exemple une turbomachine M d'aéronef. Il va de soi que le fluide à réchauffer Q pourrait être différent, en particulier du comburant (oxygène) ou des gaz **inertes de** service (azote, CO2). Dans cet exemple, la turbomachine M est configurée pour assurer la propulsion de l'aéronef, notamment, par entrainement d'au moins un organe propulsif. Enfin, dans cet exemple, le carburant est de l'hydrogène liquide, mais il va de soi que l'invention s'applique à d'autres types de carburant, par exemple, du méthane liquide ou du gaz naturel liquéfié.

Comme représenté sur la figure 2, le réservoir cryogénique R est monté dans une enceinte réservoir EN-R et le moteur M est monté dans une enceinte moteur EN-M, distincte de l'enceinte réservoir EN-R. Le système de conditionnement SC s'étend à la fois dans l'enceinte moteur EN-M et dans l'enceinte réservoir EN-R.

Dans cet exemple, le système de conditionnement SC comprend un circuit de carburant CQ relié en entrée au réservoir cryogénique R et en sortie à la turbomachine M, et une pompe mécanique P configurée pour faire circuler un flux de carburant Qc à réchauffer depuis le réservoir cryogénique R d'amont en aval dans le circuit de carburant CQ. Il va de soi que le système de conditionnement SC pourrait comprendre un nombre différent de pompes mécaniques P, en particulier un nombre supérieur à une pompe mécanique P.

Le système de conditionnement SC comprend également un système de contrôle 1 de la température d'un fluide caloporteur F selon l'invention, configuré pour transférer des calories au flux de carburant Qc de manière à le réchauffer pour qu'il puisse alimenter la turbomachine M.

Selon l'invention, toujours en référence à la figure 2, le système de contrôle 1 comprend une boucle de circulation 2 du fluide caloporteur F s'étendant à la fois dans l'enceinte réservoir EN-R et dans l'enceinte moteur EN-M. L'enceinte réservoir EN-R est configurée pour fonctionner à une température supérieure à une température minimale de fonctionnement Tmin pour éviter de givrer les sources chaudes dans les échangeurs de chaleur, comme cela sera décrit plus en détails par la suite. Par l'expression « configuré pour fonctionner à une température », on entend que les fluides (flux de carburant Qc, fluide caloporteur F, fluides chauds, ...) circulent à une température supérieure à la température minimale de fonctionnement Tmin. De manière analogue, l'enceinte moteur EN-M est configurée pour fonctionner à une température inférieure à une température maximale de fonctionnement Tmax en sortie de l'enceinte moteur EN-M, pour éviter tout risque d'endommagement de la structure de l'aéronef lors de la circulation du fluide caloporteur F entre l'enceinte moteur EN-M et l'enceinte réservoir EN-R.

Dans cet exemple, la température minimale de fonctionnement Tmin est de l'ordre de 2°C (275K). De même, dans cet exemple, la température maximale de fonctionnement Tmax est de l'ordre de 227°C (500K).

Selon l'invention, la boucle de circulation 2 comprend une branche moteur 21, s'étendant dans l'enceinte moteur EN-M entre un point d'entrée moteur P1m et un point de sortie moteur P2m, et une branche réservoir 22, s'étendant dans l'enceinte réservoir EN-R entre un point d'entrée réservoir P1r et un point de sortie réservoir P2r. Le point de sortie moteur P2m est relié fluidiquement au point d'entrée réservoir P1r et le point de sortie réservoir P2r est relié fluidiquement au point d'entrée moteur P1m, de manière à permettre la circulation continue du fluide caloporteur F dans la boucle de circulation 2.

Le fluide caloporteur F circule dans la branche moteur 21 d'amont en aval entre le point d'entrée moteur P1m et le point de sortie moteur P2m, et dans la branche réservoir 22 d'amont en aval entre le point d'entrée réservoir P1r et le point de sortie réservoir P2r.

Le fluide caloporteur F présente au point d'entrée moteur P1m, une première température T1 supérieure à la température minimale de fonctionnement Tmin. Dans cet exemple, la première température T1 est comprise entre 2°C (275K) et 90°C (363K). De préférence la première température T1 est supérieure à 2°C (275K).

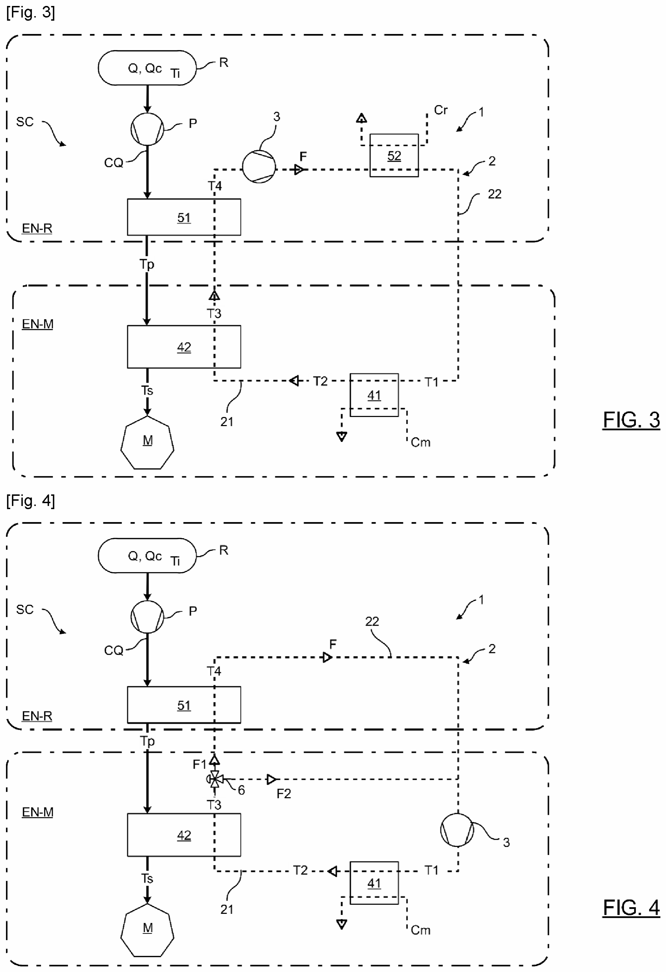

Toujours en référence à la figure 2, le système de contrôle 1 comprend une pompe mécanique 3 configurée pour faire circuler le fluide caloporteur F dans la boucle de circulation 2. Il va de soi que la boucle de circulation 2 pourrait comprendre un nombre différent de pompes mécaniques 3. De préférence, la pompe mécanique 3 est positionnée dans la boucle de circulation 2 de manière à recevoir le fluide caloporteur F présentant la température minimale, de manière à profiter de la densité maximale du fluide caloporteur F, ce qui permet de pomper un même débit massique à moindre coût énergétique. Dans cet exemple, la pompe mécanique 3 est montée dans l'enceinte moteur EN-M, comme représenté sur la figure 2. Il va de soi que la pompe mécanique 3 pourrait tout aussi bien être montée dans l'enceinte réservoir EN-R, comme représenté sur la figure 3.

Selon l'invention, le système de contrôle 1 comprend un premier échangeur moteur 41, un deuxième échangeur moteur 42 et un premier échangeur réservoir 51, montés sur la boucle de circulation 2.

Le premier échangeur moteur 41 est monté dans l'enceinte moteur EN-M sur la branche moteur 21. Le premier échangeur moteur 41 est de type fluide caloporteur/ fluide chaud et est configuré pour réchauffer le fluide caloporteur F à partir de calories transférées par un ou plusieurs fluide(s) chaud(s) Cm disponible(s) dans l'enceinte moteur EN-M, par exemple la chaleur issue de l'huile de lubrification de la turbomachine M, les calories en sortie de turbine, la chaleur de la tuyère, etc...

Le premier échangeur moteur 41 est configuré pour réchauffer le fluide caloporteur F jusqu'à une deuxième température T2 supérieure à la première température T1. Plus précisément, selon l'invention, la deuxième température T2 est supérieure à la température maximale de fonctionnement Tmax, dans cet exemple de l'ordre de 227°C (500K). En particulier, dans cet exemple, la deuxième température T2 du fluide caloporteur F en sortie du premier échangeur moteur 41 est comprise entre 227°C (500K) et 377°C (650K), ce qui permet avantageusement de limiter le débit de circulation du fluide caloporteur F dans la boucle de circulation 2.

Le premier échangeur réservoir 51 est monté dans l'enceinte réservoir EN-R sur la branche réservoir 22. Le premier échangeur réservoir 51 est de type fluide caloporteur / fluide à réchauffer Q, dans cet exemple flux de carburant Qc, et est configuré pour réchauffer le flux de carburant Qc à partir du fluide caloporteur F jusqu'à une température primaire Tp supérieure à la température initiale Ti. De préférence, la température primaire Tp du flux de carburant Qc en sortie du premier échangeur réservoir 51 est comprise entre -173°C (100K) et -73°C (200K), de manière à s'assurer que le flux de carburant Qc est dans un état gazeux en sortie du premier échangeur réservoir 51.

Le deuxième échangeur moteur 42 est monté dans l'enceinte moteur EN-M sur la branche moteur 21. Le deuxième échangeur moteur 42 est de type fluide caloporteur / fluide à réchauffer Q (ici flux de carburant Qc) et est configuré pour réchauffer le flux de carburant Qc à partir du fluide caloporteur F jusqu'à une température secondaire Ts, supérieure à la température primaire Tp. De préférence, la température secondaire Ts du flux de carburant Qc en sortie du deuxième échangeur moteur 42 est comprise entre -73°C (200K) et 27°C (300K). Une telle température permet par exemple de limiter tout risque de givrage de la vapeur d'eau contenue dans l'air en contact avec les injecteurs de carburant dans la chambre à combustion de la turbomachine M.

Selon l'invention, comme représenté sur la figure 2, après avoir été réchauffé par le premier échangeur moteur 41, le fluide caloporteur F est configuré pour circuler dans la boucle de circulation 2 successivement dans le deuxième échangeur moteur 42 et dans le premier échangeur réservoir 51. Autrement dit, le fluide caloporteur F circule dans la boucle de circulation 2 entre le deuxième échangeur moteur 42 et le premier échangeur réservoir 51 selon un sens de circulation opposé au sens de circulation du flux de carburant Qc dans le circuit de carburant CQ.

Dans le deuxième échangeur moteur 42, le fluide caloporteur F est configuré pour transférer une première partie de calories au flux de carburant Qc. Le fluide caloporteur F est alors configuré pour être refroidi jusqu'à une troisième température T3 inférieure à la deuxième température T2. La troisième température T3 est inférieure à la température maximale de fonctionnement Tmax. Le deuxième échangeur moteur 42 est ainsi configuré pour abaisser la température du fluide caloporteur F (en réchauffant le flux de carburant Qc jusqu'à la température secondaire Ts), de manière à ce que la température du fluide caloporteur F soit inférieure à la température maximale de fonctionnement Tmax en sortie de l'enceinte moteur EN-M, permettant sa circulation vers l'enceinte réservoir EN-R, par exemple en traversant dans les ailes de l'aéronef. Dans cet exemple, la troisième température T3 du fluide caloporteur F en sortie du deuxième échangeur moteur 42 est comprise entre 77°C (350K) et 227°C (500K). Dans une forme de réalisation, la troisième température T3 du fluide caloporteur F est inférieure à 202°C (475K), de préférence encore inférieure à 177°C (450K), ce qui permet l'utilisation de tuyauteries en aluminium, permettant un système de contrôle 1 bien plus léger que les systèmes de contrôle connus dans lesquels les tuyauteries sont fabriquées en inox.

Dans le premier échangeur réservoir 51, le fluide caloporteur F est configuré pour transférer une deuxième partie de calories au flux de carburant Qc. Le fluide caloporteur F est alors configuré pour être refroidi jusqu'à une quatrième température T4, inférieure à la troisième température T3, de manière à chauffer le flux de carburant Qc jusqu'à la température primaire Tp, c'est-à-dire de manière à préchauffer le flux de carburant Qc avant sa sortie de l'enceinte réservoir EN-R. Dans cet exemple, la quatrième température T4 du fluide caloporteur F en sortie du premier échangeur réservoir 51 est comprise entre 2°C (275K) et 77°C (350K), permettant d'éviter tout risque de givrage d'une source chaude dans la boucle de circulation 2.

En résumé, dans le système de contrôle 1, le fluide caloporteur F est configuré pour être refroidi en deux temps, une première fois dans le deuxième échangeur moteur 42 en transférant une première partie de calories et une deuxième fois dans le premier échangeur réservoir 51 en transférant une deuxième partie de calories. Autrement dit, dans le système de conditionnement SC, le flux de carburant Qc est configuré pour être chauffé en deux temps, une première fois dans le premier échangeur réservoir 51 par la deuxième partie de calories présentes dans le fluide caloporteur F et une deuxième fois dans le deuxième échangeur moteur 42 par la première partie de calories présentes dans le fluide caloporteur F.

Dans une forme de réalisation, en référence à la figure 3, le système de contrôle 1 comprend un deuxième échangeur réservoir 52 monté dans l'enceinte réservoir EN-R sur la branche réservoir 22. Le deuxième échangeur réservoir 52 est configuré pour réchauffer le fluide caloporteur F à partir de calories transférées par un ou plusieurs fluide(s) chaud(s) Cr disponible(s) dans l'enceinte réservoir EN-R. Dans une première forme de réalisation, le deuxième échangeur réservoir 52 est monté en aval du premier échangeur réservoir 51, le deuxième échangeur réservoir 52 est alors configuré pour réchauffer le fluide caloporteur F depuis la quatrième température T4 jusqu'à la première température T1. Dans une deuxième forme de réalisation (non représentée), le deuxième échangeur réservoir 52 est monté en amont du premier échangeur réservoir 51 pour augmenter la température du fluide caloporteur F avant son entrée dans le premier échangeur réservoir 51, de manière à ce que le fluide caloporteur F transfère plus de calories au flux de carburant Qc dans le premier échangeur réservoir 51 et le réchauffe à une température plus importante.

Dans cette forme de réalisation, la quatrième température T4 du fluide caloporteur F en sortie du premier échangeur réservoir 51 est comprise entre -123°C (150K) et 2°C (275K).

Dans cette forme de réalisation, la quatrième température T4 correspond à la température la plus basse que le fluide caloporteur F atteint dans l'ensemble de la boucle de circulation 2. Aussi, dans cet exemple, la pompe mécanique 3 est montée de préférence entre le premier échangeur réservoir 51 et le deuxième échangeur réservoir 52, de manière à profiter de la température minimale et donc de la densité maximale du fluide caloporteur F, comme décrit précédemment.

Ce document présente un exemple dans lequel le système de contrôle 1 comprend deux échangeurs moteur 41, 42 et un ou deux échangeurs réservoir 51, 52, il va de soi que le système de contrôle 1 pourrait comprendre un nombre différent d'échangeurs moteur 41, 42 et/ou d'échangeurs réservoir 51, 52, en particulier un nombre supérieur à deux échangeurs réservoir et/ou un nombre supérieur ou égal à deux échangeurs moteur.

Dans une forme de réalisation, en référence à la figure 4, le système de contrôle 1 comprend une vanne commandable 6 montée sur la boucle de circulation 2 entre le deuxième échangeur moteur 42 et le premier échangeur réservoir 51. La vanne commandable 6 permet de diriger une première partie du fluide caloporteur F1 vers le premier échangeur réservoir 51 et vers l'enceinte moteur EN-M et une deuxième partie du fluide caloporteur F2 vers le premier échangeur moteur 41. Un débit moins important de fluide caloporteur F est ainsi acheminé vers l'enceinte moteur EN-M, ce qui permet de réguler la boucle de circulation 2 tout en maintenant une extraction optimale des calories dans les sources moteurs.

Dans cet exemple, la vanne commandable 6 est montée dans l'enceinte moteur EN-M, comme représenté sur la figure 4. Il va de soi que la vanne commandable 6 pourrait tout aussi bien être montée dans l'enceinte réservoir EN-R.

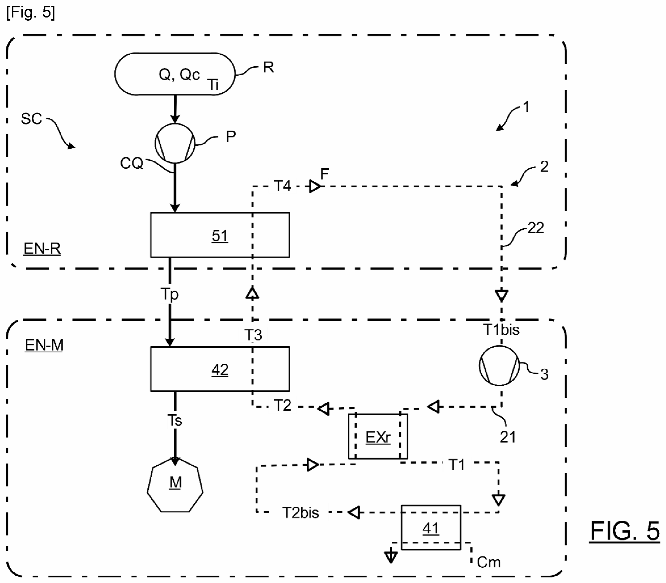

Dans une forme de réalisation, en référence à la figure 5, le système de contrôle 1 comprend un échangeur de chaleur régénérateur Exr, monté sur la boucle de circulation 2 dans l'enceinte moteur EN-M, c'est-à-dire sur la branche moteur 21. L'échangeur de chaleur régénérateur Exr est de type fluide caloporteur/fluide caloporteur et est configuré pour réchauffer le fluide caloporteur F en amont du premier échangeur moteur 41 par le fluide caloporteur F en aval de ce premier échangeur moteur 41. Autrement dit, le fluide caloporteur F est configuré pour être préchauffé en amont du premier échangeur moteur 41 par le fluide caloporteur F qui aura été réchauffé par le premier échangeur moteur 41.

Le fluide caloporteur F est ainsi configuré pour entrer dans l'enceinte moteur EN-M à une température T1bis inférieure à la température minimale de fonctionnement Tmin et pour être réchauffé dans l'échangeur régénérateur Exr à une température supérieure à la température minimale de fonctionnement Tmin, jusqu'à la première température T1, avant d'entrer dans le premier échangeur moteur 41 pour s'affranchir de tout risque de givrage de la source chaude. Autrement dit, dans l'enceinte réservoir EN-R en sortie du premier échangeur réservoir 51, le fluide caloporteur F est configuré pour être refroidi en dessous de la température minimale de fonctionnement Tmin, permettant de transférer plus de calories au flux de carburant Qc. Dans cette forme de réalisation, le fluide caloporteur F est configuré pour être préchauffé depuis la température T1bis jusqu'à la première température T1 dans l'échangeur régénérateur Exr, puis pour être chauffé jusqu'à une température T2bis dans le premier échangeur moteur 41. Le fluide caloporteur F est alors configuré pour être refroidi dans l'échangeur régénérateur Exr (en réchauffant le fluide caloporteur F circulant en amont du premier échangeur moteur 41) jusqu'à la deuxième température T2 avant d'entrer dans le deuxième échangeur moteur 42.

Dans une première forme de réalisation (représentée sur la figure 5), l'échangeur de chaleur régénérateur Exr est configuré pour être monté sur la boucle de circulation 2 en amont du deuxième échangeur moteur 42. Dans une deuxième forme de réalisation (non représentée), l'échangeur de chaleur régénérateur Exr est configuré pour être monté sur la boucle de circulation 2 en aval du deuxième échangeur moteur 42.

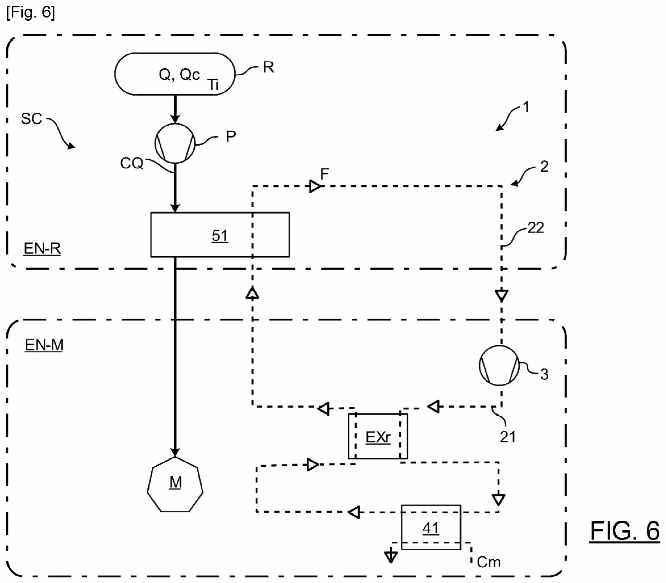

Il est présenté un échangeur régénérateur Exr monté dans un système de contrôle 1 qui comprend un premier échangeur moteur 41 pour réchauffer le fluide caloporteur F et un premier échangeur réservoir 51 et un deuxième échangeur moteur 42 pour réchauffer le flux de carburant Q respectivement dans l'enceinte réservoir EN-R et dans l'enceinte moteur EN-M. Dans un exemple non couvert par les revendications, le système de contrôle 1 peut alternativement comprendre un échangeur régénérateur Exr et être exempt du deuxième échangeur moteur 42, comme cela est représenté sur la figure 6. Dans cette forme de réalisation, le fluide caloporteur F froid entrant dans l'enceinte moteur EN-M et donc entrant dans l'échangeur régénérateur Exr peut être réchauffé de manière efficace par le fluide caloporteur F chaud en sortie du premier échangeur moteur 41 puisque ce dernier peut transférer un nombre important de calories avant d'être dirigé directement vers l'enceinte réservoir EN-R.

Il va dorénavant être décrit un procédé de contrôle de la température du fluide caloporteur F, en référence à la figure 2. Le fluide caloporteur F est au point d'entrée moteur P1m de l'enceinte moteur EN-M à une première température T1 supérieure à la température minimale de fonctionnement Tmin. Dans cet exemple, la première température T1 est supérieure à 2°C (275K).

Le procédé comprend une première étape E1 de chauffage du fluide caloporteur F dans le premier échangeur moteur 41 de l'enceinte moteur EN-M, jusqu'à une deuxième température T2, supérieure à la température maximale de fonctionnement Tmax. Dans cet exemple le fluide caloporteur F est chauffé, dans l'étape E1, jusqu'à une température comprise entre 227°C (500K) et 377°C (650K).

Le fluide caloporteur F circule ensuite dans la boucle de circulation 2 dans l'enceinte moteur EN-M, c'est-à-dire dans la branche moteur 21, jusqu'au deuxième échangeur moteur 42. Le fluide caloporteur F traverse alors, dans une deuxième étape E2, le deuxième échangeur moteur 42 dans lequel il transfère une première partie de ses calories au flux de carburant Qc. Le fluide caloporteur F est ainsi refroidi une première fois jusqu'à la troisième température T3, inférieure à la température maximale de fonctionnement Tmax. Dans cet exemple, le fluide caloporteur F est refroidi dans le deuxième échangeur moteur 42 jusqu'à une température comprise entre 77°C (350K) et 227°C (500K).

Le fluide caloporteur F est ensuite acheminé, dans une étape E3, vers l'enceinte réservoir EN-R. Dans une quatrième étape E4, le fluide caloporteur F traverse le premier échangeur réservoir 51 dans l'enceinte réservoir EN-R dans lequel il transfère une deuxième partie de ses calories au flux de carburant Qc. Le fluide caloporteur F est ainsi refroidi une deuxième fois jusqu'à la quatrième température T4. Dans cet exemple, le fluide caloporteur F est refroidi dans le premier échangeur réservoir 51 jusqu'à une température comprise entre - 123°C (150K) et 2°C (250K).

Le fluide caloporteur F circule dans le boucle de circulation 2 dans l'enceinte réservoir EN-R, c'est-à-dire dans la branche réservoir 22 pour être acheminé vers l'enceinte moteur EN-M où il sera réchauffé à nouveau dans le premier échangeur moteur 41.

## Revendications

1. Système de conditionnement (SC) de carburant configuré pour alimenter une turbomachine (M) d'aéronef à partir de carburant issu d'un réservoir cryogénique (R) dans lequel il est stocké à une température initiale (Ti), le système de conditionnement (SC) s'étendant dans une enceinte réservoir (EN-R) et dans une enceinte moteur (EN-M) distincte de l'enceinte réservoir (EN-R), le réservoir cryogénique (R) étant monté dans l'enceinte réservoir (EN-R) et la turbomachine (M) étant montée dans l'enceinte moteur (EN-M), l'enceinte réservoir (EN-R) étant configurée pour fonctionner à une température inférieure à une température maximale de fonctionnement (Tmax), l'enceinte moteur (EN-M) étant configurée pour fonctionner à une température supérieure à une température minimale de fonctionnement (Tmin), le système de conditionnement (SC) comprenant :
- un circuit de carburant (CQ) relié en entrée au réservoir cryogénique (R) et en sortie à la turbomachine (M), un flux de carburant (Qc) circulant d'amont en aval dans le circuit de carburant (CQ),
- au moins une pompe mécanique (P) configurée pour faire circuler le flux de carburant (Qc) depuis le réservoir cryogénique (R) d'amont en aval dans le circuit de carburant (CQ), et
- un système de contrôle (1) de la température d'un fluide caloporteur (F) configuré pour transférer des calories au flux de carburant (Qc), le système de contrôle (1) comprenant :
- une boucle de circulation (2) du fluide caloporteur (F) s'étendant à la fois dans l'enceinte réservoir (EN-R) et dans l'enceinte moteur (EN-M), la boucle de circulation (2) comprenant :
une branche moteur (21) s'étendant dans l'enceinte moteur (EN-M) entre un point d'entrée moteur (P1m) et un point de sortie moteur (P2m), le fluide caloporteur (F) circulant d'amont en aval entre le point d'entrée moteur (P1m) et le point de sortie moteur (P2m), le fluide caloporteur (F) ayant une première température (T1) au point d'entrée moteur (P1m), la première température (T1) étant supérieure à la température minimale de fonctionnement (Tmin) de l'enceinte moteur (EN-M),
une branche réservoir (22) s'étendant dans l'enceinte réservoir (EN-R) entre un point d'entrée réservoir (P1r) et un point de sortie réservoir (P2r), le fluide caloporteur (F) circulant d'amont en aval entre le point d'entrée réservoir (P1r) et le point de sortie réservoir (P2r), le point de sortie moteur (P2m) étant relié fluidiquement au point d'entrée réservoir (P1r), le point de sortie réservoir (P2r) étant relié fluidiquement au point d'entrée moteur (P1m),
- au moins un premier échangeur moteur (41), monté sur la branche moteur (21), configuré pour réchauffer le fluide caloporteur (F) jusqu'à une deuxième température (T2) supérieure à la première température (T1), à partir de calories transférées par au moins un fluide chaud (Cm) disponible dans l'enceinte moteur (EN-M),
- au moins un premier échangeur réservoir (51), monté sur la branche réservoir (22), configuré pour réchauffer le flux de carburant (Qc) à partir du fluide caloporteur (F) jusqu'à une température primaire (Tp), et
- au moins une pompe mécanique (3) configurée pour faire circuler le fluide caloporteur (F) dans la boucle de circulation (2),
- le système de conditionnement (SC) étant **caractérisé en ce que** :
- le système de contrôle (1) comprend au moins un deuxième échangeur moteur (42), monté sur la branche moteur (21), configuré pour réchauffer le flux de carburant (Qc) à partir du fluide caloporteur (F) jusqu'à une température secondaire (Ts), supérieure à la température primaire (Tp),
- la deuxième température (T2) jusqu'à laquelle le fluide caloporteur (F) est réchauffé dans le premier échangeur moteur (41) est supérieure à la température maximale de fonctionnement (Tmax) de l'enceinte réservoir (EN-R), et
- la pompe mécanique (3) est configurée pour faire circuler le fluide caloporteur (F) dans la boucle de circulation (2) de manière à :
dans le deuxième échangeur moteur (42), transférer une première partie de calories du fluide caloporteur (F) au flux de carburant (Qc) et refroidir le fluide caloporteur (F) jusqu'à une troisième température (T3) inférieure à la deuxième température (T2), la troisième température (T3) étant inférieure à la température maximale de fonctionnement (Tmax), de manière à chauffer le fluide caloporteur (F) dans le premier échangeur moteur (41) à une température supérieure à la température maximale de fonctionnement (Tmax) et à abaisser cette température dans le deuxième échangeur moteur (42) en dessous de la température maximale de fonctionnement (Tmax), avant sa sortie de l'enceinte moteur (EN-M) et son entrée dans l'enceinte réservoir (EN-R), et
dans le premier échangeur réservoir (51), transférer une deuxième partie de calories du fluide caloporteur (F) au flux de carburant (Qc) et refroidir le fluide caloporteur (F) jusqu'à une quatrième température (T4), inférieure à la troisième température (T3), de manière à chauffer le flux de carburant (Qc) jusqu'à la température primaire (Tp), de manière à préchauffer le flux de carburant (Qc) avant sa sortie de l'enceinte réservoir (EN-R).

2. Système de conditionnement (SC) selon la revendication 1, dans lequel le système de contrôle (1) comprend au moins un deuxième échangeur réservoir (52), monté sur la branche réservoir (22), le deuxième échangeur réservoir (52) étant configuré pour réchauffer le fluide caloporteur (F) à partir de calories transférées par au moins un fluide chaud (Cr) disponible dans l'enceinte réservoir (EN-R).

3. Système de conditionnement (SC) selon la revendication 2, dans lequel la quatrième température (T4) du fluide caloporteur (F) en sortie du premier échangeur réservoir (51) est comprise entre -123°C (150K) et 2°C (275K).

4. Système de conditionnement (SC) selon la revendication 1, dans lequel la quatrième température (T4) du fluide caloporteur (F) en sortie du premier échangeur réservoir (51) est comprise entre 2°C (275K) et 77°C (350K).

5. Système de conditionnement (SC) selon l'une des revendications 1 à 4, dans lequel la deuxième température (T2) du fluide caloporteur (F) en sortie du premier échangeur moteur (41) est comprise entre 227°C (500K) et 377°C (650K).

6. Système de conditionnement (SC) selon l'une des revendications 1 à 5, dans lequel la troisième température (T3) du fluide caloporteur (F) en sortie du deuxième échangeur moteur (42) est comprise entre 77°C (350K) et 227°C (500K).

7. Système de conditionnement (SC) selon la revendication 6, dans lequel la troisième température (T3) du fluide caloporteur (F) en sortie du deuxième échangeur moteur (42) est inférieure à 202°C (475K), de préférence inférieure à 177°C (450K).

8. Système de conditionnement (SC) selon l'une des revendications 1 à 7, dans lequel le système de contrôle (1) comprend une vanne commandable (6) montée sur la boucle de circulation (2) entre le deuxième échangeur moteur (42) et le premier échangeur réservoir (51), de manière à diriger une première partie du fluide caloporteur (F1) vers le premier échangeur réservoir (51) et vers l'enceinte moteur (EN-M) et une deuxième partie du fluide caloporteur (F2) vers le premier échangeur moteur (41), de manière à permettre un débit moins important du fluide caloporteur (F) vers l'enceinte moteur (EN-M).

9. Système de conditionnement (SC) selon l'une des revendications 1 à 8, dans lequel le système de contrôle (1) comprend un échangeur de chaleur régénérateur (Exr), monté sur la branche moteur (21), l'échangeur de chaleur régénérateur (Exr) étant configuré pour réchauffer le fluide caloporteur (F) en amont du premier échangeur moteur (41) par le fluide caloporteur (F) en aval du premier échangeur moteur (41).

10. Système de conditionnement (SC) selon l'une des revendications 1 à 9, dans lequel la température primaire (Tp) du flux de carburant (Qc) en sortie du premier échangeur réservoir (51) est comprise entre -173°C (100K) et -73°C (200K).

11. Système de conditionnement (SC) selon l'une des revendications 1 à 10, dans lequel la température secondaire (Ts) du flux de carburant (Qc) en sortie du deuxième échangeur moteur (42) est comprise entre -73°C (200K) et 27°C (300K).

12. Aéronef comprenant un réservoir cryogénique (R), une turbomachine (M) et un système de conditionnement (SC) selon l'une des revendications 1 à 11.

13. Procédé de contrôle de la température du fluide caloporteur (F) au moyen du système de contrôle (1) d'un système de conditionnement (SC) selon l'une des revendications 1 à 11, le procédé comprenant les étapes consistant à :
- chauffer le fluide caloporteur (F) dans l'enceinte moteur (EN-M) dans le premier échangeur moteur (41), jusqu'à une deuxième température (T2) supérieure à la température maximale de fonctionnement (Tmax) de l'enceinte réservoir (EN-R),
- refroidir le fluide caloporteur (F) dans l'enceinte moteur (EN-M) dans le deuxième échangeur moteur (42), jusqu'à une troisième température (T3) inférieure à la température maximale de fonctionnement (Tmax),
- acheminer le fluide caloporteur (F) vers l'enceinte réservoir (EN-R).

## Patentansprüche

1. Kraftstoffkonditionierungssystem (SC), das zur Versorgung einer Turbomaschine (M) eines Flugzeugs mit Kraftstoff aus einem Kryobehälter (R) ausgelegt ist, in dem dieser mit einer Ausgangstemperatur (Ti) gelagert wird, wobei sich das Konditionierungssystem (SC) in einem Tankraum (EN-R) und in einem vom Tankraum (EN-R) verschiedenen Motorraum (EN-M) erstreckt, wobei der Kryobehälter (R) im Tankraum (EN-R) eingebaut ist und die Turbomaschine (M) im Motorraum (EN-M) eingebaut ist, wobei der Tankraum (EN-R) für einen Betrieb bei einer Temperatur unter einer maximalen Betriebstemperatur (Tmax) ausgelegt ist, wobei der Motorraum (EN-M) für einen Betrieb bei einer Temperatur über einer minimalen Betriebstemperatur (Tmin) ausgelegt ist, wobei das Konditionierungssystem (SC) umfasst:
- einen Kraftstoffkreis (CQ), der am Eingang mit dem Kryobehälter (R) und am Ausgang mit der Turbomaschine (M) verbunden ist, wobei ein Kraftstoffstrom (Qc) von stromaufwärts nach stromabwärts im Kraftstoffkreis (CQ) zirkuliert,
- mindestens eine mechanische Pumpe (P), die dazu ausgelegt ist, den Kraftstoffstrom (Qc) vom Kryobehälter (R) von stromaufwärts nach stromabwärts im Kraftstoffkreis (CQ) umzuwälzen, und
- ein Regelungssystem (1) der Temperatur eines Wärmeträgerfluids (F), das dazu ausgelegt ist, Wärme an den Kraftstoffstrom (Qc) zu übertragen, wobei das Regelungssystem (1) umfasst:
- eine Zirkulationsschleife (2) für das Wärmeträgerfluid (F), die sich sowohl im Tankraum (EN-R) als auch im Motorraum (EN-M) erstreckt, wobei die Zirkulationsschleife (2) umfasst:
einen Motorzweig (21), der sich im Motorraum (EN-M) zwischen einem Motoreingangspunkt (P1m) und einem Motorausgangspunkt (P2m) erstreckt, wobei das Wärmeträgerfluid (F) zwischen dem Motoreingangspunkt (P1m) und dem Motorausgangspunkt (P2m) von stromaufwärts nach stromabwärts zirkuliert, wobei das Wärmeträgerfluid (F) am Motoreingangspunkt (P1m) eine erste Temperatur (T1) hat, wobei die erste Temperatur (T1) höher ist als die minimale Betriebstemperatur (Tmin) des Motorraums (EN-M),
einen Tankzweig (22), der sich im Tankraum (EN-R) zwischen einem Tankeingangspunkt (P1r) und einem Tankausgangspunkt (P2r) erstreckt, wobei das Wärmeträgerfluid (F) zwischen dem Tankeingangspunkt (P1r) und dem Tankausgangspunkt (P2r) von stromaufwärts nach stromabwärts zirkuliert, wobei der Motorausgangspunkt (P2m) mit dem Tankeingangspunkt (P1r) fluidisch verbunden ist, wobei der Tankausgangspunkt (P2r) mit dem Motoreingangspunkt (P1m) fluidisch verbunden ist,
- mindestens einen ersten Motorwärmetauscher (41), der am Motorzweig (21) angebracht und dazu ausgelegt ist, das Wärmeträgerfluid (F) bis auf eine zweite Temperatur (T2) zu erwärmen, die höher ist als die erste Temperatur (T1), anhand von Wärme, die von mindestens einem im Motorraum (EN-M) verfügbaren warmen Fluid (Cm) übertragen wird,
- mindestens einen ersten Tankwärmetauscher (51), der am Tankzweig (22) angebracht und dazu ausgelegt ist, den Kraftstoffstrom (Qc) anhand des Wärmeträgerfluids (F) bis auf eine Primärtemperatur (Tp) zu erwärmen, und
- mindestens eine mechanische Pumpe (3), die dazu ausgelegt, das Wärmeträgerfluid (F) in der Zirkulationsschleife (2) umzuwälzen,
- wobei das Konditionierungssystem (SC) **dadurch gekennzeichnet ist, dass**:
- das Regelungssystem (1) mindestens einen zweiten Motorwärmetauscher (42) umfasst, der am Motorzweig (21) angebracht und dazu ausgelegt ist, den Kraftstoffstrom (Qc) anhand des Wärmeträgerfluids (F) bis auf eine Sekundärtemperatur (Ts) zu erwärmen, die höher ist als die Primärtemperatur (Tp),
- die zweite Temperatur (T2), bis auf die das Wärmeträgerfluid (F) im ersten Motorwärmetauscher (41) erwärmt wird, höher ist als die maximale Betriebstemperatur (Tmax) des Tankraums (EN-R), und
- die mechanische Pumpe (3) dazu ausgelegt ist, das Wärmeträgerfluid (F) in der Zirkulationsschleife (2) derart umzuwälzen, dass:
im zweiten Motorwärmetauscher (42) ein erster Teil der Wärme des Wärmeträgerfluids (F) auf den Kraftstoffstrom (Qc) übertragen und das Wärmeträgerfluid (F) bis auf eine dritte Temperatur (T3) abgekühlt wird, die niedriger ist als die zweite Temperatur (T2), wobei die dritte Temperatur (T3) niedriger ist als die maximale Betriebstemperatur (Tmax), so dass das Wärmeträgerfluid (F) im ersten Motorwärmetauscher (41) auf eine Temperatur erwärmt wird, die höher ist als die maximale Betriebstemperatur (Tmax), und diese Temperatur im zweiten Motorwärmetauscher (42) unter die maximale Betriebstemperatur (Tmax) gesenkt wird, bevor es aus dem Motorraum (EN-M) austritt und in den Tankraum (EN-R) eintritt, und
im ersten Tankwärmetauscher (51) einen zweiten Teil der Wärme des Wärmeträgerfluids (F) auf den Kraftstoffstrom (Qc) übertragen und das Wärmeträgerfluid (F) bis auf eine vierte Temperatur (T4) abgekühlt wird, die niedriger ist als die dritte Temperatur (T3), so dass der Kraftstoffstrom (Qc) bis auf die Primärtemperatur (Tp) erwärmt wird, so dass der Kraftstoffstrom (Qc) vor seinem Austritt aus dem Tankraum (EN-R) vorgewärmt wird.

2. Konditionierungssystem (SC) nach Anspruch 1, wobei das Regelungssystem (1) mindestens einen zweiten Tankwärmetauscher (52) umfasst, der am Tankzweig (22) angebracht ist, wobei der zweite Tankwärmetauscher (52) dazu ausgelegt ist, das Wärmeträgerfluid (F) anhand von Wärme aufzuwärmen, die von mindestens einem im Tankraum (EN-R) verfügbaren warmen Fluid (Cr) übertragen wird.

3. Konditionierungssystem (SC) nach Anspruch 2, wobei die vierte Temperatur (T4) des Wärmeträgerfluids (F) am Ausgang des ersten Tankwärmetauschers (51) zwischen -123 °C (150 K) und 2 °C (275 K) liegt.

4. Konditionierungssystem (SC) nach Anspruch 1, wobei die vierte Temperatur (T4) des Wärmeträgerfluids (F) am Ausgang des ersten Tankwärmetauschers (51) zwischen 2 °C (275 K) und 77 °C (350 K) liegt.

5. Konditionierungssystem (SC) nach einem der Ansprüche 1 bis 4, wobei die zweite Temperatur (T2) des Wärmeträgerfluids (F) am Ausgang des ersten Motorwärmetauschers (41) zwischen 227 °C (500 K) und 377 °C (650 K) liegt.

6. Konditionierungssystem (SC) nach einem der Ansprüche 1 bis 5, wobei die dritte Temperatur (T3) des Wärmeträgerfluids (F) am Ausgang des zweiten Motorwärmetauschers (42) zwischen 77 °C (350 K) und 227 °C (500 K) liegt.

7. Konditionierungssystem (SC) nach Anspruch 6, wobei die dritte Temperatur (T3) des Wärmeträgers (F) am Ausgang des zweiten Motorwärmetauschers (42) unter 202 °C (475 K), vorzugsweise unter 177 °C (450 K), liegt.

8. Konditionierungssystem (SC) nach einem der Ansprüche 1 bis 7, wobei das Regelungssystem (1) ein steuerbares Ventil (6) umfasst, das in die Zirkulationsschleife (2) zwischen dem zweiten Motorwärmetauscher (42) und dem ersten Tankwärmetauscher (51) eingebaut ist, so dass ein erster Teil des Wärmeträgerfluids (F1) zum ersten Tankwärmetauscher (51) und zum Motorraum (EN-M) und ein zweiter Teil des Wärmeträgerfluids (F2) zum ersten Motorwärmetauscher (41) geleitet wird, so dass ein geringerer Durchfluss des Wärmeträgerfluids (F) zum Motorraum (EN-M) gestattet wird.

9. Konditionierungssystem (SC) nach einem der Ansprüche 1 bis 8, wobei das Regelungssystem (1) einen regenerativen Wärmetauscher (Exr) umfasst, der im Motorzweig (21) angebracht ist, wobei der regenerative Wärmetauscher (Exr) dazu ausgelegt ist, das Wärmeträgerfluid (F) stromaufwärts des ersten Motorwärmetauschers (41) durch das Wärmeträgerfluid (F) stromabwärts des ersten Motorwärmetauschers (41) zu erwärmen.

10. Konditionierungssystem (SC) nach einem der Ansprüche 1 bis 9, wobei die Primärtemperatur (Tp) des Kraftstoffstroms (Qc) am Ausgang des ersten Tankwärmetauschers (51) zwischen -173 °C (100 K) und -73 °C (200 K) liegt.

11. Konditionierungssystem (SC) nach einem der Ansprüche 1 bis 10, wobei die Sekundärtemperatur (Ts) des Kraftstoffstroms (Qc) am Ausgang des zweiten Motorwärmetauschers (42) zwischen -73 °C (200 K) und 27 °C (300 K) liegt.

12. Flugzeug, umfassend einen Kryobehälter (R), eine Turbomaschine (M) und einem Konditionierungssystem (SC) nach einem der Ansprüche 1 bis 11.

13. Verfahren zur Regelung der Temperatur des Wärmeträgerfluids (F) mittels des Regelungssystems (1) eines Konditionierungssystems (SC) nach einem der Ansprüche 1 bis 11, wobei das Verfahren die folgenden Schritte umfasst:
- Erwärmen des Wärmeträgerfluids (F) im Motorraum (EN-M) im ersten Motorwärmetauscher (41) bis auf eine zweite Temperatur (T2), die über der maximalen Betriebstemperatur (Tmax) des Tankraums (EN-R) liegt,
- Kühlen des Wärmeträgerfluids (F) im Motorraum (EN-M) im zweiten Motorwärmetauscher (42) bis auf eine dritte Temperatur (T3), die unter der maximalen Betriebstemperatur (Tmax) liegt,
- Befördern des Wärmeträgerfluids (F) zum Tankraum (EN-R).

## Claims

1. A fuel conditioning system (SC) configured to supply an aircraft turbomachine (M) with fuel from a cryogenic tank (R) wherein it is stored at an initial temperature (Ti), the conditioning system (SC) extending in a tank enclosure (EN-R) and in an engine enclosure (EN-M) distinct from the tank enclosure (EN-R), the cryogenic tank (R) being mounted in the tank enclosure (EN-R) and the turbomachine (M) being mounted in the engine enclosure (EN-M), the tank enclosure (EN-R) being configured to operate at a temperature lower than a maximum operating temperature (Tmax), the engine enclosure (EN-M) being configured to operate at a temperature above a minimum operating temperature (Tmin), the conditioning system (SC) comprising:
- a fuel circuit (CQ) connected at the inlet to the cryogenic tank (R) and at the outlet to the turbomachine (M), a fuel flow (Qc) circulating from upstream to downstream in the fuel circuit (CQ),
- at least one mechanical pump (P) configured to circulate the fuel flow (Qc) from the cryogenic tank (R) from upstream to downstream in the fuel circuit (CQ), and
- a temperature control system (1) for controlling the temperature of a heat transfer fluid (F) configured to transfer calories to the fuel flow (Qc), the control system (1) comprising:
- a circulation loop (2) for circulating the heat transfer fluid (F) extending both in the tank enclosure (EN-R) and in the engine enclosure (EN-M), the circulation loop (2) comprising:
- an engine branch (21) extending in the engine enclosure (EN-M) between an engine inlet point (P1m) and an engine outlet point (P2m), the heat transfer fluid (F) circulating from upstream to downstream between the engine inlet point (P1m) and the engine outlet point (P2m), the heat transfer fluid (F) having a first temperature (T1) at the engine inlet point (P1m), the first temperature (T1) being greater than the minimum operating temperature (Tmin) of the engine enclosure (EN-M),
- a tank branch (22) extending in the tank enclosure (EN-R) between a tank inlet point (P1r) and a tank outlet point (P2r), the heat transfer fluid (F) circulating from upstream to downstream between the tank inlet point (P1r) and the tank outlet point (P2r), the engine outlet point (P2m) being fluidly connected to the tank inlet point (P1r), the tank outlet point (P2r) being fluidly connected to the engine inlet point (P1m),
- at least one first engine heat exchanger (41), mounted on the engine branch (21), configured to warm the heat transfer fluid (F) to a second temperature (T2) higher than the first temperature (T1), from calories transferred by at least one hot fluid (Cm) available in the engine enclosure (EN-M),
- at least one first tank exchanger (51), mounted on the tank branch (22), configured to warm the fuel flow (Qc) from the heat transfer fluid (F) to a primary temperature (Tp), and
- at least one mechanical pump (3) configured to circulate the heat transfer fluid (F) in the circulation loop (2),
- the fuel conditioning system (SC) being **characterized in that**:
- the control system (1) comprises at least a second engine heat exchanger (42), mounted on engine branch (21), configured to warm the fuel flow (Qc) from the the heat transfer fluid (F) to a secondary temperature (Ts) higher than the primary temperature (Tp)
- the second temperature (T2) up to which the heat transfer fluid (F) is warmed in the first engine exchanger (41) is higher than the maximum operating temperature (Tmax) of the tank enclosure (EN-R), and
- the mechanical pump (3) is configured to circulate the heat transfer fluid (F) in the circulation loop (2) so as to:
- in the second engine heat exchanger (42), transferring a first part of calories from the heat transfer fluid (F) to the fuel flow (Qc) and cooling the heat transfer fluid (F) to a third temperature (T3) lower than the second temperature (T2), the third temperature (T3) being lower than the maximum operating temperature (Tmax), so as to heat the heat transfer fluid (F) in the first engine exchanger (41) to a temperature higher than the maximum operating temperature (Tmax) and to lower this temperature in the second engine exchanger (42) below the maximum operating temperature (Tmax), before it leaves the engine enclosure (EN-M) and enters the tank enclosure (EN-R), and
- in the first tank exchanger (51), transferring a second part of calories from the heat transfer fluid (F) to the fuel flow (Qc) and cooling the heat transfer fluid (F) to a fourth temperature (T4), lower than the third temperature (T3), so as to heat the fuel flow (Qc) to the primary temperature (Tp), so as to warm the fuel flow (Qc) before it leaves the tank enclosure (EN-R).

2. The conditioning system (SC) according to claim 1, wherein the control system (1) comprises at least one second tank exchanger (52), mounted on the tank branch (22), the second tank exchanger (52) being configured to warm the heat transfer fluid (F) from calories transferred by at least one hot fluid (Cm) available in the tank enclosure (EN-R).

3. The conditioning system (SC) according to claim 2, wherein the fourth temperature (T4) of the heat transfer fluid (F) at the outlet of the first tank exchanger (51) is between -123°C (150K) and 2°C (275K).

4. The conditioning system (SC) according to claim 1, wherein the fourth temperature (T4) of the heat transfer fluid (F) at the outlet of the first tank exchanger (51) is between 2°C (275K) and 77°C (350K).

5. The conditioning system (SC) according to one of claims 1 to 4, wherein the second temperature (T2) of the heat transfer fluid (F) at the outlet of the first engine exchanger (41) is between 227°C (500K) and 377°C (650K).

6. The conditioning system (SC) according to one of claims 1 to 5, wherein the third temperature (T3) of the heat transfer fluid (F) at the outlet of the second engine exchanger (42) is between 77°C (350K) and 227°C (500K).

7. The conditioning system (SC) according to claim 6, wherein the third temperature (T3) of the heat transfer fluid (F) at the outlet of the second engine exchanger (42) is less than 202°C (475K), preferably less than 177°C (450K).

8. The conditioning system (SC) according to one of claims 1 to 7, wherein the control system (1) comprises a controllable valve (6) mounted on the circulation loop (2) between the second engine exchanger (42) and the first tank exchanger (51), so as to direct a first part of the heat transfer fluid (F1) towards the first tank exchanger (51) and towards the engine enclosure (EN-M) and a second part of the heat transfer fluid (F2) towards the first engine exchanger (41), so as to allow a lower flow rate of the heat transfer fluid (F) towards the engine enclosure (EN-M).

9. The conditioning system (SC) according to one of claims 1 to 8, wherein the control system (1) comprises a regenerative heat exchanger (Exr), mounted on the engine branch (21), the regenerative heat exchanger (Exr) being configured to warm the heat transfer fluid (F) upstream of the first engine exchanger (41) by the heat transfer fluid (F) downstream of the first engine exchanger (41).

10. The conditioning system (SC) according to one of claims 1 to 9, wherein the primary temperature (Tp) of the fuel flow (Qc) at the outlet of the first tank exchanger (51) is between -173°C (100K) and -73°C (200K).

11. The conditioning system (SC) according to one of claims 1 to 10, wherein the secondary temperature (Ts) of the fuel flow (Qc) at the outlet of the second engine exchanger (42) is between -73°C (200K) and 27°C (300K).

12. An aircraft comprising a cryogenic tank (R), a turbomachine (M) and a conditioning system (SC) according to one of claims 1 to 11.

13. A method for controlling the temperature of the heat transfer fluid (F) by means of the control system (1) of a conditioning system (SC) according to one of claims 1 to 11, the method comprising the steps consisting in:
- heating the heat transfer fluid (F) in the engine enclosure (EN-M) in the first engine exchanger (41) to a second temperature (T2) above the maximum operating temperature (Tmax) of the tank enclosure (EN-R),
- cooling the heat transfer fluid (F) in the engine enclosure (EN-M) in the second engine exchanger (42) to a third temperature (T3) below the maximum operating temperature (Tmax).
- conveying the heat transfer fluid (F) towards the tank enclosure (EN-R).
